# EUROPEAN PATENT SPECIFICATION

(11) **EP 0 508 565 B1**
(45) Date of publication and mention of the grant of the patent: **20.08.1997**
(21) Application number: 92300882.5
(22) Date of filing: 03.02.1992
(51) Int. Cl.: G11B 5/48, G11B 5/255, G11B 5/31

(54) **Wear-resistant head for contact reading and writing magnetic media**
Verschleissarmer Kopf zur Wiedergabe und Aufnahme mit Berührung auf einem magnetischen Träger
Tête résistante à l'usure pour lire et écrire avec contact sur un support magnétique

(30) Priority: 10.04.1991 US 648025
(43) Date of publication of application: 14.10.1992
(73) Proprietor: CENSTOR CORPORATION, San Jose California 95126 (US)
(72) Inventor: Hamilton, Harold J., Santa Clara, California 95051 (US); Anderson, Richard D., Sunnyvale, California 94087 (US)
(74) Representative: Wombwell, Francis

(56) References cited:
- EP-A- 0 430 407
- GB-A- 2 020 882
- JP-A- 2 227 813
- US-A- 4 819 091
- US-A- 5 065 271
- PATENT ABSTRACTS OF JAPAN vol. 4, no. 118 (P-24)22 August 1980
- IBM TECHNICAL DISCLOSURE BULLETIN vol. 21, no. 8, January 1979, ARMONK, USA page 3093 R.E.NORWOOD 'damped head arm'

## Description

### Background and Summary of the Invention

The head/media interface has been the focus of numerous problems in the magnetic recording industry. Such problems include head and media abrasive wear, catastrophic wear or "head crash", static and dynamic friction, pole-tip recession, lubricant failure, accumulation of wear products adversely affecting recording performance, corrosion of metallic films in head and media, and difficulties in the control of surface finishes. Some of these problems are common to all recording technologies, while others are of special concern regarding contact recording on flexible media, and non-contact recording on rigid media.

As one might expect, the distinction between these categories commences to blur as the quest for higher recording densities on rigid media leads to lower and lower head-media separation, or "flying height". Indeed, all of the above problems, along with others, are encountered in efforts to achieve reliable operation of heads in continuous sliding contact on rigid media at high media velocity. However, the fundamental challenge in any such effort is to eliminate the possibility of catastrophic wear, and to reduce normal abrasive wear of the head and media to enable a suitably long product life, while ensuring true sliding contact.

Prior art contact recording systems have addressed the abrasive wear problem by employing various high-hardness materials on slider assemblies, which then serve to limit abrasive wear on the associated transducer. For example, U.S. Patent No. 4,819,091 to Brezoczky et al discloses a contact recording system which utilizes, among other things, single-crystal diamond as a wear surface for a slider operating in continuous contact with a magnetic recording medium. JP-A-2 227 813, according to which claim 1 has been put in the two-part form, discloses a head contacting a recording medium during recording and loaded by an elongate resilient beam. As is typical of such prior art systems, the hardened slider assembly is of such size and mass that, despite any reductions in the effective operating load, the inertial forces acting on the slider are sufficient to create an unacceptable potential for head crash.

Experience accumulated with conventional air-bearing sliders in relatively low-velocity "drag" tests, as well as in continuous "start/stop" tests, confirms this conclusion, and argues strongly against such attempts to adapt sliders for use in sliding contact. This is not surprising, since such sliders are designed to "fly" with a relatively large applied load. Failure of the air bearing, due either to dynamic instability or to the presence of contaminants, typically results in a large force (load plus inertial forces) being applied over a very small area -- giving rise to extremely high local pressures under conditions of high surface velocity. The consequence of this is very high localized energy dissipation, manifested in an avalanche of thermal and chemical reactions, i.e., a "head crash".

This logic appears to call for a major departure from conventional design and manufacture of recording heads and suspensions for application in sliding contact on rigid (and other) media. Such a departure, for example, is proposed in my co-pending U.S. Patent 5 041 932, filed November 27, 1989 or the European Patent Application EP-A-430 407 claiming US-A-5 041 932 as priority document, published June 5, 1991 and therefore being an Article 54(3) document, for INTEGRATED READ/WRITE HEAD/FLEXURE/CONDUCTOR STRUCTURE. Specifically, it has been demonstrated in many thousands of hours of tests with integrated head/flexure/conductor structures that a reduction in mass of two-tothree-orders of magnitude (relative to that of conventional slider-suspension systems), coupled with the concomitant, correspondingly lower required load, effectively results in the elimination of catastrophic failure at the head/media interface, even at media velocities of 15-meters-per-second, or greater. These tests have also demonstrated a capability for very low rates of abrasive head wear even under large shock-resistant loads. Finally, in recording tests conducted with these micro-mass head/flexure structures employing perpendicular probe-type heads and two-layer perpendicular media, there has been seen a capability for very high recording density, with low signal modulation and other indications that the pole tip is in continuous sliding contact with the media.

However, sliding-contact operation favors sliders allowing only a small area of contact with the media surface, consistent with manufacturing tolerances and local pressure constraints. This is particularly so in the case of micro-integrated head/flexure structures having relatively stiff, i.e., nongimbaled, suspension characteristics, since any deviation from coplanarity of the wear surface of the slider and that of the media, due to media runout or other mechanical variance, may lead to pole-tip separation from the media. Such separation results in excessive modulation or other degradation in recording performance. As is illustrated in one of the drawing figures herein, still to be described, the larger the distance from the pole tip in any direction to the edge of the contact pad, the greater will be the separation of the pole tip from the media surface. In practice, with such relatively stiff suspension systems, both calculation and measurement of modulation, resulting from media runout, indicate the need to limit the size of the contact pad such that no point of contact with the media may be more than about 20-micrometers from the pole tip in any direction.

It is desirable also to minimize the area of contact of the head with the media in order to minimize uncontrollable air-bearing effects. Moreover, static and dynamic frictional forces may be reduced by minimizing the area of contact with the media.

By way of summary, then, it has been demonstrated, first, that the possibility of catastrophic failure at the head/media interface is essentially eliminated by limiting the maximum local contact pressure (achieved through appropriate reductions in mass and load) to a level well below the level at which destructive thermal and chemical avalanche processes commence. Second, through proper selection of materials at the head/media interface, a very low rate of abrasive wear, enabling long product life, has been demonstrated under conditions guaranteeing continuous sliding contact. Third, it is desirable in contact recording to limit the area of contact of the head with the media in order to minimize separation of the pole tip from the media resulting from mechanical variances or instabilities, and to minimize air-bearing effects and frictional drag. It is with the latter two of these issues, principally, that this invention is concerned.

More explicitly, an important object of the present invention is to ensure a very low rate of abrasive wear of magnetic recording heads in continuous sliding contact with media (rigid and flexible), under conditions which effectively eliminate the possibility of catastrophic wear, and which result in negligible wear of the media surface over the life of the product.

A further object of the invention is to minimize the creation of wear products which may adversely affect recording performance and give rise to abnormal wear.

Another object is to minimize static and dynamic friction at the head/media interface.

Still another object of the invention is to minimize pole tip/media separation in sliding contact operation resulting from media runout or other mechanical variance, thereby giving rise to excessive modulation or other degradation in recording performance.

Yet a further object of this invention is to minimize air-bearing effects on heads designed to operate in sliding contact with media, so that the effective load is determined and controlled by the applied force.

These and other objects and advantages are achieved by the invention as claimed in claim 1, and will become more fully apparent as the description which now follows is read in conjunction with the accompanying drawings.

### Description of the Drawings

Fig. 1 is a simplified, fragmentary illustration of one type of catastrophic failure (head crash) associated with rigid-disk technology.

Fig. 2 is a graph which plots wear rate versus local contact pressure -- illustrating a point where catastrophic wear occurs.

Fig. 3 is a simplified, fragmentary view depicting a condition of noncoplanarity between the underside of a hardened contact pad, formed according to the invention, and the surface of a recording medium.

Fig. 4A is a fragmentary, simplified side elevation, not drawn to scale, illustrating a read/write head structure, or head, constructed in accordance with the present invention joined integrally to the free end of an elongate, nongimbaled beam, or flexure, whose other end is suitably anchored to an actuator arm which, *inter alia*, provides support for the beam.

Fig. 4B, also not to scale, is an enlarged fragmentary detail drawn generally from the area in Fig. 4A embraced by the two curved arrows.

Figs. 5A, 5B, 5C illustrate, in more detail, the construction of one embodiment of the proposed head, with Fig. 5A showing a fragmentary view from the media-contact side of the head, Fig. 5B illustrating a view taken from the top side of Fig. 5A, and Fig. 5C displaying a view taken from the left side of Fig. 5B.

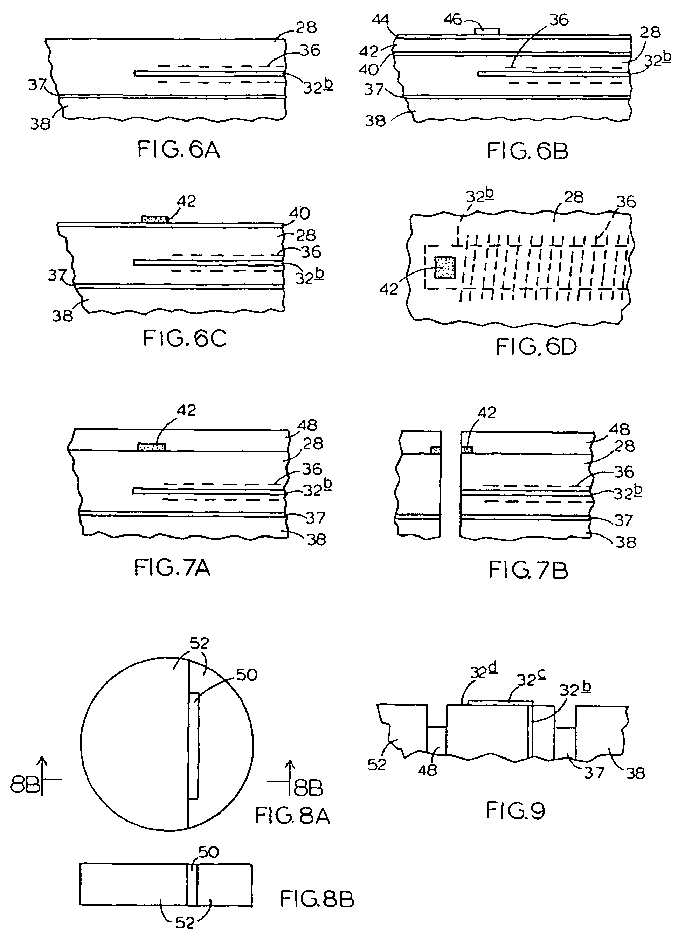

Fragmentary Figs. 6A-6D illustrate a fabrication process, with Figs. 6A-6C looking transversely at various layers which are prepared in the fabrication process, and with Figure 6D, essentially, taking a point of view from the top sides of Figs. 6B, 6C.

Figs. 7A, 7B, which hold the same point of view taken in Figs. 6A-6C, illustrate steps in the fabrication process following those steps illustrated in Figs. 6A-6D.

Fig. 8A is a simplified plan view of yet a further step in the fabrication process, and Fig. 8B is a sectional view taken generally from the bottom side of Fig. 8A.

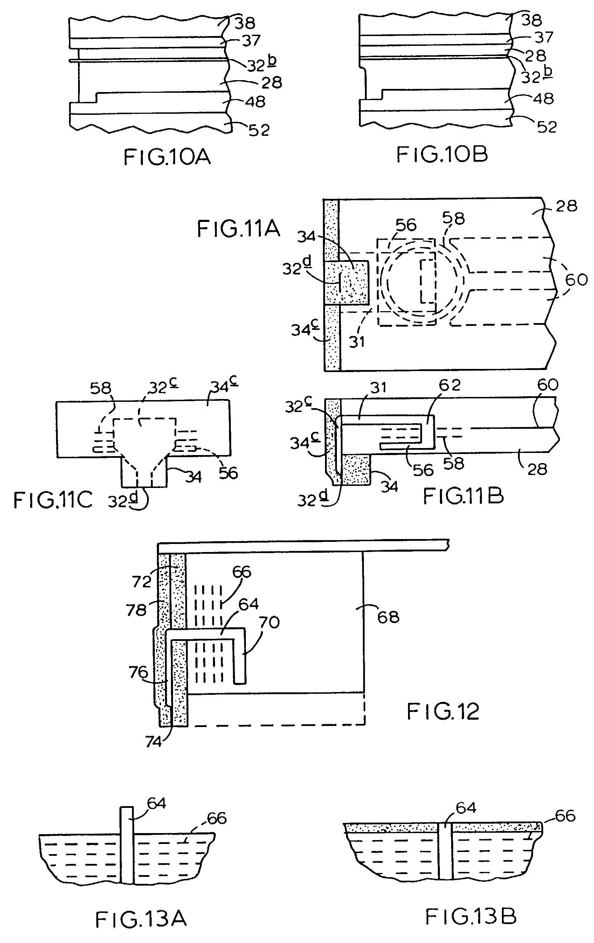

Fig. 9 is a fragmentary sectional enlargement of a portion of the top side of Fig. 8 illustrating conditions which exist in the fabrication process somewhat later in the fabrication activity.

Figs. 10A, 10B illustrate alternatives to the process of fabrication depicted in the entire collection of Figs. 6A-9, inclusive.

Figs. 11A, 11B, 11C illustrate an alternative embodiment featuring a probe-type head including a multi-layer spiral, or "pancake", type coil.

Fig. 12 shows yet another probe-type head embodiment including a "pancake" type coil.

Figs. 13A, 13B illustrate certain steps in the fabrication of the structure shown in Fig. 12.

### Detailed Description of and Best Mode for Carrying Out the Invention

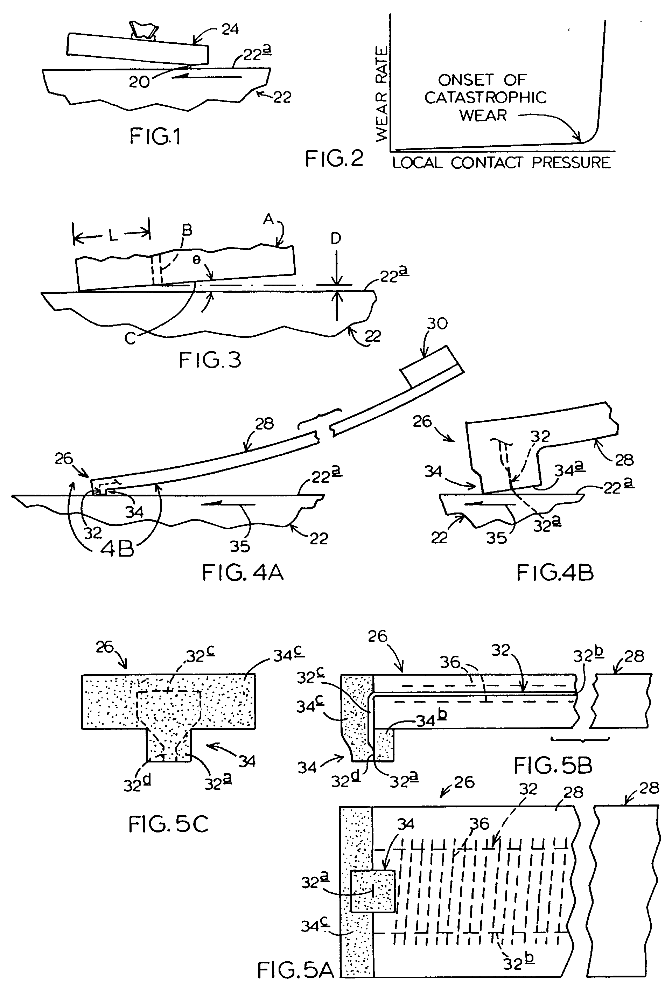

In order to understand better the significant contribution made by the present invention, it is useful to examine the processes which give rise to catastrophic failure, or "head crash", associated with conventional rigid-disk technology. Head crash originates typically at some microscopic region of a slider's surface, e.g., at a corner or an edge, due to dynamic instability, or at the point of contact with a contaminant, or asperity, on the media surface. Fig. 1 illustrates the latter type situation, with a contaminant 20 located between the surface 22a of a rigid disk 22 and a slider 24. When this happens the pressure in the region of contact rapidly rises by many orders of magnitude; and when this occurs at high relative velocities, the localized energy dissipation becomes very large -- the result of a destructive avalanche of physical and chemical processes. This failure of the lubricant (in this case air) is not unlike that occurring in more conventional mechanical bearings.

In contrast with air-bearing sliders, which normally are free of wear, sliders operating in continuous contact are subject to at least some minimal rate of ongoing abrasive wear. In general, at a given velocity, normal abrasive wear increases gradually with increasing load. However, at some point the processes of abrasive wear rapidly give way to more destructive physical and chemical processes, as depicted at the knee of the curve shown in Fig. 2. Thus, it may be surmised that the probability of catastrophic wear might be greatly reduced by limiting the maximum local contact pressure to a level well below the onset of such destructive processes.

The validity of this assumption, as it relates to the operation of very low-mass heads in sliding contact with rigid disks, has been demonstrated on many test fixtures involving several thousands of hours each of crash-free operation at velocities greater than 15-meters-per-second, and with loads as large as 200-milligrams applied to contact areas of about 1 x 10⁻⁵-cm² (20,000-grams/cm²). By contrast, the load per square centimeter at microscopic regions of contact, in the initiation of head crash of conventional air bearing sliders, is estimated to be about 10,000,000-grams/cm² or greater. In more than 100,000 accumulated hours of sliding-contact operation on thin-film media (many tests involving disks with a carbon overcoat of only about 100-angstroms thickness), there has been no indication of catastrophic wear on either the heads or the media.

Since sliding-contact operation involves some degree of abrasive wear, it is desirable that the portion of a head structure which will make contact with the media (henceforth to be referred to as the contact pad, the contact area or the contact structure) be constructed of a material having a microstructure characterized by a low rate of abrasive wear, by low friction, by relatively high thermal conductivity, and by low chemical reactivity. It is well known that diamond uniquely satisfies these needs. Diamond-like carbon (DLC) films, formed by plasma-enhanced chemical vapor deposition (PECVD), display many of the above characteristics, and may readily be deposited and patterned to serve as contact pads. It should be noted here that it is the tip of the pole (or poles) that is to be maintained in contact, or as near in contact as possible, with the medium surface (in order to maximize recording performance), which implies that the pole(s) be deposited on, or overcoated (preferably both) with a suitable wear-resistant material. Many other hard, low-wear ceramic films, including metal oxides, nitrides and carbides may be deposited either by high-bias or reactive sputtering, or by chemical vapor deposition.

High-hardness wear materials, i.e., materials characterized by a Knoop hardness greater than 1000-kg/mm², which are readily employable in the present invention include single-crystal diamond, polycrystalline diamond and diamond-like carbon. Other usable materials include single-crystal, polycrystalline, and amorphous forms of the oxides, nitrides and carbides of aluminum, silicon, boron, titanium, tantalum, zirconium and tungsten.

In general, the hardness, density, porosity, chemical reactivity and internal stress are sensitively dependent on deposition parameters. Adhesion to the supporting substrate is another critical concern, often necessitating the deposition of a particular adhesion layer to effect a suitable bond between the substrate and the film in question. This situation is exemplified in the fabrication of a preferred embodiment of the present invention, as will be described shortly.

In contact recording it is desirable not only to form the contact pad of a high-hardness, wear-resistant material, but also to limit the size of the pad in order to minimize the separation between pole tip(s) and media that may result from lack of coplanarity of the contact pad and media surface, which may in turn derive from media runout or other mechanical variance. This situation is depicted in Fig. 3 which illustrates, fragmentarily and schematically at A, a contact pad formed in accordance with the invention encompassing a pole tip structure B which is exposed on the undersurface C of the pad. The greatest distance between pole tip B and the furthest point on the perimeter of the base of the contact pad is shown at L. In this figure, there is shown a small angle of departure θ from coplanarity of surfaces 22a and C, and in this condition, the pole tip/media separation D is approximately equal to L sin θ.

A limitation on contact pad size is particularly important in the case of nongimbaled, relatively stiff beam suspensions where, for example, the angle θ may be as much as several tenths of a degree due to media runout. Thus, as an illustration, for θ = 0.2-degrees, the distance from the pole tip to a point of contact between the pad and the media must not exceed 8.6-micrometers if pole tip/media separation is to be restricted to 0.03-micrometers (30-nanometers).

Fortunately, gradual wear of the contact pad on the media results in the development of a spherical or cylindrical surface which in practice further reduces pole tip/media separation by a factor of two or more. Empirical measurements with low-mass, integrated, head/flexure structures verify the above relationship between contact pad dimensions and signal modulation due to disk runout. Such measurements indicate, for such nongimbaled suspensions, that no point of contact between the pad and media should be more than about 20-micrometers (in any direction) from the pole tip (where the same is exposed), in order that signal modulation be kept small. The contact pad proposed by the present invention is constructed with this size limitation taken into account. Gimbaled, three-point contact-type sliders may be somewhat less sensitive to media runout or other mechanical variances, but generally suffer disadvantages relating to larger mass and associated dynamic limitations, as well as to complications in manufacture and assembly.

The need to limit the lateral dimensions of the contact pad relates also to the need to reduce to a negligible level air-bearing support of the head in the contact area, in order to control accurately the effective load. Limiting the contact area also tends to minimize frictional drag forces. Lift may also be created by the flexure body. However, the magnitude of such lift decreases rapidly with separation from the media surface. It should be noted in passing that reverse motion of the media, i.e., with the media moving toward the end of the beam, will tend to produce a negative pressure which would result in the effective load being somewhat greater than that imposed by beam deflection. Therefore, in order to avoid such negative or positive contributions to effective load, it is desirable to ensure a minimum height or thickness of the contact pad, i.e., separation of the flexure body from the media surface. Simulation studies and experiments with integrated head/flexure/structures indicate the need in practice to ensure a minimum separation (taking into account wear over the lift of the product) of about 4-micrometers. The contact pad of the present invention is so dimensioned.

Addressing attention now to a description of a preferred embodiment of the present invention, let us begin by looking at Figs. 4A, 4B in the drawings. Here, at 26 is shown a preferred embodiment of an electromagnetic read/write head structure (head) which is shown joined integrally to the free end of an elongate nongimbaled flexure, or beam 28, whose other end is suitably anchored for support on an actuator arm 30. As was mentioned in the description of these drawing figures above, the parts shown are not drawn to scale. Rather, they are exaggerated in some respects for illustration and discussion purposes.

Head 26, the details of construction of which will be elaborated shortly, includes a magnetic pole structure illustrated fragmentarily in dashed lines at 32 having what is referred to herein as a read/write portion 32A (Fig. 4B) which is exposed on the underside of head 26, and an electrical coil structure (not illustrated in this figure) operatively coupled to the pole structure.

Surrounding the downwardly extending portion of the pole structure illustrated in Figs. 4A, 4B, which portion is also referred to as the pole tip, is a small, downwardly projecting formation 34 of a high-hardness, wear-resistant material, the underside, or surface, 34A of which is intended for continuous sliding contact with the recording surface of a relatively moving magnetic recording medium, such as the upper surface 22A in rigid disk medium 22. Formation 34 is also referred to herein both as a media-surface contact structure, and as a contact pad. Undersurface 34a is referred to as a "planar surface" which forms the interface between the head structure and the recording surface of the recording medium. One should recognize, however, what was mentioned earlier, namely that wear may cause this surface to depart slightly from true planarity. Relative motion of surface 22a in these two drawing figures is in the direction of arrow 35.

Head structure 26 has a mass herein which is less than about 500-micrograms. Such a mass limitation is true for all head structures made in accordance with the invention.

In Figs. 4A, 4B, the head structure, carried by beam 28, is shown in operative, sliding-contact engagement with surface 22A. Downward bend illustrated in beam 28 is intended to indicate the loading action produced on the head structure by the beam, and the head structure is shown at a slight inclination (somewhat like that depicted in Fig. 3) to indicate one typical relative angular disposition between the head structure and the surface of a recording medium. Preferably, of course, surface 34a is substantially coplanar with surface 22a, with read/write portion 32a substantially directly in contact with surface 22a.

Turning attention now to Figs. 5A, 5B, 5C, shown in these figures are end portions of an integrated head/flexure/conductor structure constructed, except with respect to newly included contact pad structure, substantially as described in the above-mentioned patent application. Within this integrated structure, the head structure (or head) is again indicated by reference numeral 26, the elongate flexure structure (or beam) by reference character 28, and the contact structure (or pad) by reference numeral 34. In this structure, these three components form a single integrated unit. In a modified approach to the invention, the head structure and contact pad structure may be formed as an integrated unit, and then be suitably bonded to the free end of a flexure, like beam 28. In both kinds of approaches, the head structure is referred to herein as being "joined with" the beam structure.

Taking now a more detailed look at what is shown in Figs. 5A, 5B, 5C, magnetic pole structure 32 includes a magnetic core 32b, a magnetic yoke 32c and a magnetic pole 32d, the outer (lower) end of which forms previously mentioned read/write portion 32a. A helix coil, or electrical coil structure, 36 surrounds core 32b.

Contact pad 34 is shown as a projection below the surface of flexure 28, and is formed in what might be viewed as a pair of layers 34b, 34c, with layer 34c overcoating pole 32d and yoke 32c as well as the end surface of flexure body 28. In the region surrounding pole or pole tip 32d the contact pad forms what can be viewed as an encompassing column of material.

Magnetic pole structure 32, as illustrated in Figs. 5A, 5B, 5C, is of the single-pole, probe-type design intended for use with perpendicular recording media characterized by a recording layer having an out-of-plane easy axis of magnetization. Not shown in any of these figures is a flux return pole which provides a low reluctance path for coupling magnetic flux to the soft magnetic underlayer of the media.

The physical and microstructure properties of materials desired for the fabrication of flexure body 28 will, in general, be different from those suited to the fabrication of contact pad 34, since low internal stress, flexure properties and fracture resistance are of principal concern in the former case, while hardness and resistance to abrasive wear are of central importance in the latter case. In particular, experience has shown that aluminum oxide, sputtered with relatively low bias, results in relatively low-density amorphous films with low internal stress and is well suited to the fabrication of integrated head/flexure/conductor structures. Other metal oxides, sputtered under similar conditions, may be used, alternatively. Such material is less well suited for fabrication of the contact pad. However, the same material, sputtered under high bias conditions and applied to the contact area, results in a great improvement in wear characteristics. Other materials and fabrication processes provide still greater resistance to wear, as will be explained next.

Still referring to Figs. 5A, 5B, 5C, a preferred embodiment of the present invention makes use of diamond-like carbon (DLC) in the entirety of contact pad 34, thereby enabling continuous sliding contact under relatively high loads with abrasive wear rates less than about 15-nanometers-per-week. Since good recording performance may be achieved with perpendicular probe-type heads having pole heights as much as 10-micrometers, this very low wear rate of pole height suggests a continuous duty life of the head in excess of ten years. For comparison, conventional thin film longitudinal heads have a tolerance for wear of less than 1-micrometer.

The fabrication of such a preferred embodiment of this invention may be best understood by reference to Figs. 6A, 6B, 6C, 6D, Figs. 7A, 7B, Figs. 8A, 8B, and Fig. 9. The fabrication of head/flexure/conductor structures of this invention proceeds at the wafer level essentially as described in the cited patent application. That is, a copper release layer 37 is plated on a ceramic substrate 38, and various layers of aluminum oxide, copper, gold, nickel-iron or other soft magnetic alloy, are deposited, patterned, and planarized to form the gold bonding pads (not shown), the magnetic core 32b, the helix coil 36, the flux return pole (not shown), and the flexure beam 28, culminating in at least several micrometers of planarized aluminum oxide over the flux return pole, but exposing the copper isolation walls between flexure beams. At this point the wafer appears, in a fragmentary section view through the centerline of a flexure, as schematized in Fig. 6A.

Photoresist is applied and patterned, enabling copper to be plated through the mask, as before, thereby extending the height of the isolation walls by several micrometers. A thin layer 40 of silicon or silicon carbide is then sputtered on the surface to serve as an adhesion layer. The wafer is then lapped just to expose the isolation walls, without removing layer 40 elsewhere.

Following this (see Fig. 6B), a layer 42, about 10- to about 15-micrometers thick, of DLC, is deposited on top of layer 40 by means of plasma-enhanced chemical vapor deposition. Surface topography is then created by a suitable process to permit accurate alignment of the wear (contact) pad. Next, a thin layer 44 of titanium is sputtered on top of layer 42, followed by the application and patterning of photoresist 46, thereby defining the contact pad area in proximity to the end of the magnetic core. Titanium layer 44 is etched off except under the photoresist. Layer 42 of DLC is then removed by plasma ashing. The remaining photoresist and titanium are removed to leave sharply defined contact pads formed of DLC, as shown in Figs. 6C, 6D. The removal of DLC, except in the contact pad, once again exposes the surface of the isolation walls. A copper plating base layer is sputtered on the surface, and copper is plated to a thickness of about 80- to about 100-micrometers. Finally, this surface is planarized, leaving about 60- to about 80-micrometers of a copper layer 48 over the contact pad, as shown in Fig. 7A. The wafer is then cut (Fig. 7B) into bars 50, the widths of which are equal to the length of flexure beam 28, and the exposed core ends are lapped and polished.

One or more bars 50 is (are) mounted in a fixture 52 with the polished surface co-planar with the surface of fixture 52, thereby creating a flat, circular wafer configuration, as shown in figures 8A, 8B. Amorphous CoZrNb, or other suitable soft magnetic alloy, is now deposited, preferably by ion-beam deposition, forming a suitable magnetic pole layer on the exposed surface of the bar, which layer is magnetically coupled with the end of core 32b. This layer is annealed to improve magnetic properties, photoresist is applied and patterned, and the layer is ion-beam etched, leaving pole 32d (Figs. 5B, 5C) under the photoresist mask. The photoresist is stripped, and yoke 32C (Figs. 5B, 5C) is fabricated on top of pole 32d, either by electroplating or by ion-beam deposition, according to well known practice.

The exposed edges of release layer 37 (see Figs. 6 and 7), copper clad layer 48 and the copper isolation walls (not shown) are now selectively etched (leaving pole 32d and yoke 32c unaffected) to a depth of about 20- to about 40-micrometers, as shown in cross section in Fig. 9. Diamond-like carbon is deposited on this upper surface (in Fig. 9) to a thickness of about 5-micrometers, forming layer 34c (as shown in Figs. 5A, 5B, 5C) and encapsulating pole tip 32d in wear-resistant contact pad 34. The etched relief of the copper release layer, etc., provides a discontinuity in layer 34c along the periphery of the end surface of the flexure beam, thereby facilitating later separation of the head/flexure/conductor structures. Alternatively, DLC may be deposited without etch-relieving the copper layers, i.e., on the planar surface, and subsequently plasma etched through a photomask, leaving DLC on the end surface of the flexure beam.

Finally, bars 50 are removed from fixture 52 and placed in an etch bath which dissolves copper clad layer 48, the isolation walls and release layer 37, allowing individual head/flexure/conductor structures to be released from host wafer 38. These structures are then ready for mounting, lapping to form the contact surface and finally, testing.

An alternative to the foregoing process of fabrication involves the deposition of preferred wear material not on the wafer surface, but rather on the end (pole face) surfaces of bars after slicing from the wafer. Prior to slicing into bars, the aluminum oxide at the wafer surface is etch-relieved through a mask to form projecting pads similar in size and position to the contact pads discussed previously. A copper clad layer 48 is deposited over the surface, and is planarized as previously described. The wafer is then sliced into bars. One or more of these bars is (are) mounted in fixture 52, as before, and the aluminum oxide at the end surfaces of the flexures is etched to a depth of about 10- to about 15-micrometers, leaving, in each structure, the end of core 32b unetched and protruding, as shown in Fig. 10A. Instead of etch-relieving the entire end surface of the flexure, a portion of the surface, as shown in Fig. 10B, may be etch relieved through a mask, thereby leaving the end of core 32b encompassed by AL₂O₃. DLC is then deposited on this surface, which is subsequently lapped to expose again the end of core 32b. The pole/yoke structure is fabricated as before, followed by an overcoat layer of DLC. After removal from the fixture, the exposed bottom surface of AL₂O₃ is etched to a depth of about 10-micrometers, leaving the pole tip encompassed in DLC in a contact pad whose longitudinal length is equal to the sum of the thicknesses of the underlayer and overcoat layers of DLC.

Turning attention now to an alternative embodiment of the present invention, the same is constructed in a manner similar to that described above for the helical-coil head, but is applied to perpendicular, probe-type, head/flexure/conductor structures utilizing more conventional multi-layer spiral, or "pancake", type coils, as illustrated in Figs. 11A, 11B, 11C. The method of fabrication of such integrated structures is similar in all principal respects to that described in the previously cited patent application. Shown in Fig. 11A, a view from the media-contact surface, is a magnetic return pole 56, a portion of a spiral coil 58 and conductors 60, the tip of pole 32d, the contact pad 34, and overcoat layer 34c fabricated of wear-resistant material, all on the end of flexure beam 28. The magnetic circuit is shown in a kind of section view in Fig. 11B, including a return pole 56, a back-gap stud 62, magnetic core 31, yoke 32c, and pole 32d. Also shown in cross section is multi-layer coil 58. The pole and yoke are shown in Fig. 11C with a point of view which is similar to that taken in Fig. 5C for the helical coil structure.

Still another embodiment of this invention is adapted for application with "vertical" type probe heads, utilizing multi-layer "pancake" type coils, for perpendicular recording on two-layer media, as shown in sectional view in Fig. 12. It is desirable in such heads to use relatively many coil layers (four to eight) and relatively few turns per layer, in order to minimize the overall height of the head, and to obtain a satisfactory aspect ratio of height to length. This is readily achievable since, unlike the case with longitudinal thin-film heads, a relatively small gap between the main pole and flux return pole is not required and, indeed, not desirable. In practice such head structures may have a nearly cubic form, about 250-micrometers on a side, and a mass as small as about 50-micrograms. When mounted on nongimbaled dielectric flexure beams, with deposited conductors and bonding pads, the assembly is similar in form, mass and operation to that for the previously discussed integrated head/flexure conductor structures.

Such heads are constructed on a thin nonmagnetic wafer 68, (about 0.03- to about 0.6-mm thick), e.g., a silicon wafer, using well known thin-film fabrication processes. A flux-return pole 70 is first formed on the wafer surface. The multi-layer spiral coil 66 is fabricated, using either organic or inorganic insulating material, over return pole 70 in a manner well known in the art.

After completion of the coil structure, the soft magnetic back-gap stud 64 is plated above the insulating layer overlying coil 66, as shown in Fig. 13A. A layer 72, about 10- to about 15-micrometers thick of DLC, is deposited, and the surface is lapped to a plane, exposing the end of stud 64 (see Fig. 13B). The pole 74 and yoke 76 are then fabricated and a second overcoat layer 78 of DLC, about 5- to about 10-micrometers thick, is deposited, encapsulating the pole and yoke. The DLC is now selectively removed through a photo mask and the wafer is cut or etched into bars of heads. Dielectric flexure/conductors are bonded in sheet form to the top surface of the bar (opposite the contact surface). The wafer substrate material and coil insulation materials are now selectively etched, leaving the contact pad, composed of DLC, protruding below the substrate surface. This assembly is then cut into individual head/flexure/conductor structures, which are now ready for contact pad lapping and final testing.

Another embodiment of the present invention employs a "horizontal" type thin-film longitudinal transducer, and is fabricated in the form of integrated head/flexure/conductor structures as described in the cited patent application. These structures are used with recording media having an in-plane easy axis of magnetization. In accordance with specifications of the present invention, the contact pad is formed substantially of wear-resistant material, and is limited in dimensions to ensure minimal separation of the pole tip from the media surface. However, as stated in the aforementioned patent application, such thin-film type transducers do not function well with large throat height and consequently have relatively low tolerance to wear.

Embodiments of the present invention may be employed with many other horizontally fabricated type longitudinal thin-film heads. For example, head structures which might employ the invention are illustrated in U.S. Patents to Lazzari, Nos. 4,698,708, 4,809,103 and 4,949,207, and in U.S. Patent No. 4,544,421 to Springer. In the fabrication of all such horizontal heads, the formation of wear-resistant contact pads, and the control of pad dimensions, following the creation of the magnetic pole/gap/pole structures, would closely follow the wafer-level process described above. The present invention may be practiced by utilizing various wear-resistant materials in the contact pad, including polycrystalline diamond and refractory metal oxides, nitrides and carbides. Other methods of deposition and patterning to limit contact pad dimensions may also be employed. Given the wide range of transducers implementable in the structure of the present invention, and the usability of various wear-resistant materials, the cumulative mass of a head structure and beam will be less than about 3-milligrams.

## Claims

1. An electromagnetic read/write head structure (26), in operative condition joined to and loaded by a resilient elongate beam (28) without significant articulation therebetween for holding said head structure in substantially continuous sliding contact with the surface of a relatively moving magnetic recording medium (22), said head structure (26), comprising
a magnetic pole structure (32) including a read/write portion (32a) adapted for facing such a surface,
an electrical coil structure (36) operatively coupled to said pole structure (32), and
a high-hardness, media-surface contact structure (34) at least partially encompassing said read/write portion (32a), characterised in that no point of contact between said contact structure (34) and the medium surface (22a) is more distant than about 20-µm from the read/write portion (32a).

2. The head structure of claim 1, wherein said contact structure (34) includes a substantially planar surface (34a) which forms the interface between the head structure (26) and the surface of such a medium (22), and said read/write portion (32a) is exposed in said contact structure's said surface (34a).

3. The head structure of claim 2, wherein the contact structure (34) protrudes transversely at least approximately 4-µm from the beam (28).

4. The head structure of claims 1, 2 or 3, wherein said contact structure (34) is formed of single-crystal diamond, polycrystalline diamond or diamond-like carbon.

5. The head structure of claims 1, 2 or 3, wherein said contact structure (34) is formed of single-crystal, polycrystalline, or amorphous forms of oxides, nitrides, or carbides of material selected from the group consisting of aluminum, silicon, boron, titanium, tantalum, zirconium and tungsten.

6. The head structure of claims 1, 2 or 3, which has a mass less than about 500-micrograms.

7. The head structure of claim 4 which has a mass less than about 500-micrograms.

8. The head structure of claim 5 which has a mass less than about 500-micrograms.

9. The head structure of claims 1, 2 or 3, wherein said pole structure (32) takes the form of a single-pole design for recording on perpendicular recording media characterized by a recording layer having an out-of-plane easy axis of magnetization and a low-reluctance flux-return underlayer with an in-plane easy axis of magnetization.

10. The head structure of claims 1, 2 or 3 wherein said pole structure (32) takes the form of a two-pole ring-type design for recording on longitudinal recording media characterized by a recording layer having an in-plane easy axis of magnetization.

11. The head structure of claims 1, 2 or 3 which is integral with such a beam (28).

12. The head structure of claims 1, 2 or 3 which, together with such a beam (28), has a cumulative mass less than about 3-milligrams.

13. The head structure of claims 1, 2 or 3, wherein said pole structure (32) is at least partially fabricated adjacent a layer (34b) of wear-resistant material a portion of which forms said contact structure (34).

14. The head structure of claim 13 which further includes another layer (34c) of wear-resistant material that cooperates with said first-mentioned layer (34b) to create a column of such material fully encompassing said pole structure (32) adjacent its said read/write portion (32a).

15. The head structure of claims 1, 2 or 3, wherein said contact structure (34) has a Knoop hardness greater than 1000-kg/mm².

## Patentansprüche

1. Elektromagnetische Lese-/Schreibkopfstruktur (26), die im Betriebszustand durch einen elastischen, langgestreckten Träger (28) ohne wesentliche Gelenkwirkung dazwischen angeschlossen ist und durch diesen belastet wird, um die Kopfstruktur in im wesentlichen kontinuierlichem Gleitkontakt mit der Oberfläche eines sich relativ hierzu bewegenden magnetischen Aufzeichnungsträgers (22) zu halten, wobei die Kopfstruktur (26) folgendes aufweist:
- eine Magnetpolstruktur (32) mit einem Lese-/Schreibabschnitt (32a), der so ausgebildet ist, dass er einer solchen Fläche zugewandt ist;
- einer elektrischen Spulenstruktur (36), die funktionsmäßig mit der Polstruktur (32) verbunden ist; und
- einer Trägeroberfläche-Kontaktstruktur (34) mit hoher Härte, die den Lese-/Schreibabschnitt (32) zumindest teilweise umfasst;
**dadurch gekennzeichnet**, dass kein Kontaktpunkt zwischen der Kontaktstruktur (34) und der Trägeroberfläche (22a) mehr als ungefähr 20 µm vom Lese-/Schreibabschnitt (32a) entfernt ist.

2. Kopfstruktur nach Anspruch 1, bei der die Kontaktstruktur (34) eine im wesentlichen ebene Oberfläche (34a) aufweist, die die Grenzfläche zwischen der Kopfstruktur (26) und der Oberfläche eines solchen Trägers (22) bildet, und bei der der Lese-/Schreibabschnitt (32a) an der Oberfläche (34a) der Kontaktstruktur freiliegt.

3. Kopfstruktur nach Anspruch 2, bei der die Kontaktstruktur (34) mindestens ungefähr 4 µm vom Träger (28) in Querrichtung vorsteht.

4. Kopfstruktur nach einem der Ansprüche 1, 2 oder 3, bei der die Kontaktstruktur (34) aus einkristallinem Diamant, polykristallinem Diamant oder diamantähnlichem Kohlenstoff besteht.

5. Kopfstruktur nach einem der Ansprüche 1, 2 oder 3, bei der die Kontaktstruktur (34) aus einkristallinen, polykristallinen oder amorphen Formen von Oxiden, Nitriden oder Carbiden eines Metalls besteht, das aus der aus Aluminium, Silizium, Bor, Titan, Tantal, Zirkonium und Wolfram bestehenden Gruppe ausgewählt ist.

6. Kopfstruktur nach einem der Ansprüche 1, 2 oder 3, die über eine Masse von weniger als ungefähr 500 µg verfügt.

7. Kopfstruktur nach Anspruch 4 mit einer Masse von weniger als ungefähr 500 µg.

8. Kopfstruktur nach Anspruch 5 mit einer Masse von weniger als ungefähr 500 µg.

9. Kopfstruktur nach einem der Ansprüche 1, 2 oder 3, bei der die Polstruktur (32) die Form einer einpoligen Konstruktion für Aufzeichnungsvorgänge auf Aufzeichnungsträgern mit rechtwinkliger Magnetisierung einnimmt, **gekennzeichnet durch** eine Aufzeichnungsschicht mit einer außerhalb der Ebene liegenden Achse leichter Magnetisierung und einer Flussumkehr-Unterschicht mit niedrigem magnetischem Widerstand mit in der Ebene liegender Achse leichter Magnetisierung.

10. Kopfstruktur nach einem der Ansprüche 1, 2 oder 3, bei der die Polstruktur (32) die Form einer zweipoligen Konstruktion vom Ringtyp zum Aufzeichnen auf langgestreckten Aufzeichnungsträgern hat, **gekennzeichnet durch** eine Aufzeichnungsschicht mit einer in der Ebene liegenden Achse leichter Magnetisierung.

11. Kopfstruktur nach einem der Ansprüche 1, 2 oder 3, die einstückig mit dem Träger (28) ausgebildet ist.

12. Kopfstruktur nach einem der Ansprüche 1, 2 oder 3, die zusammen mit dem Träger (28) eine Gesamtmasse von weniger als ungefähr 3 mg aufweist.

13. Kopfstruktur nach einem der Ansprüche 1, 2 oder 3, bei der die Polstruktur (32) zumindest teilweise angrenzend an eine Schicht (34b) aus abnutzungsbeständigem Material hergestellt ist, von der ein Teil die Kontaktstruktur (34) bildet.

14. Kopfstruktur nach Anspruch 13, die ferner eine andere Schicht (34c) aus abnutzungsbeständigem Material aufweist, die mit der erstgenannten Schicht (34b) zusammenwirkt, um eine Säule derartigen Materials zu schaffen, die die Polstruktur (32) angrenzend an deren Lese-/Schreibabschnitt (32a) vollständig umschließt.

15. Kopfstruktur nach einem der Ansprüche 1, 2 oder 3, bei der die Kontaktstruktur (34) eine Knoophärte größer als 1000 kg/mm² aufweist.

## Revendications

1. Structure de tête de lecture/d'écriture électromagnétique (26), qui, en condition de fonctionnement, est réunie à, et est chargée par, une poutrelle allongée et élastique (28), sans articulation significative entre elles afin de tenir ladite structure de tête en contact de glissement sensiblement continu avec la surface d'un support d'enregistrement magnétique relativement mobile (22), ladite structure de tête (26) comprenant
une structure de pôle magnétique (32) comportant une partie de lecture/d'écriture (32a) conçue pour faire face à cette surface,
une structure de bobine électrique (36) couplée, en fonctionnement, à ladite structure de pôle (32), et
une structure de contact avec la surface du support et d'un haut degré de dureté (34), et englobant, au moins partiellement, ladite partie de lecture/d'écriture (32a), caractérisée en ce qu'aucun point de contact entre ladite structure de contact (34) et la surface de support (22a) ne se situe à une distance supérieure à 20 µm environ de la partie de lecture/d'écriture (32a).

2. Structure de tête selon la revendication 1, dans laquelle ladite structure de contact (34) comporte une surface sensiblement plane (34a) qui constitue l'interface entre la structure de tête (26) et la surface d'un tel support (22), et ladite partie de lecture/d'écriture (32a) est exposée dans ladite surface (34a) de ladite structure de contact.

3. Structure de tête selon la revendication 2, dans laquelle la structure de contact (34) dépasse, transversalement, de la poutrelle (28) d'au moins 4 µm environ.

4. Structure de tête selon la revendication 1, 2 ou 3, dans laquelle ladite structure de contact (34) est formée de diamant monocristallin, de diamant polycristallin ou de carbone de type diamant.

5. Structure de tête selon la revendication 1, 2 ou 3, dans laquelle ladite structure de contact (34) est formée de formes monocristallines, polycristallines ou amorphes d'oxydes, de nitrures ou de carbures de matériau sélectionné parmi le groupe constitué de l'aluminium, du silicone, du bore, du titane, du tantale, du zirconium et du tungstène.

6. Structure de tête selon la revendication 1, 2 ou 3, ayant une masse inférieure à 500 microgrammes environ.

7. Structure de tête selon la revendication 4, ayant une masse inférieure à 500 microgrammes environ.

8. Structure de tête selon la revendication 5, ayant une masse inférieure à 500 microgrammes environ.

9. Structure de tête selon la revendication 1, 2 ou 3, dans laquelle ladite structure de pôle (32) prend la forme d'une configuration monopolaire permettant d'enregistrer sur un support d'enregistrement perpendiculaire qui est caractérisé par une couche d'enregistrement présentant un axe de magnétisation facile et hors du plan, et une sous-couche de retour de flux à faible reluctance présentant un axe de magnétisation facile et dans le plan.

10. Structure de tête selon la revendication 1, 2 ou 3, dans laquelle ladite structure de pôle (32) prend la forme d'une configuration d'anneau bipolaire permettant d'enregistrer sur un support d'enregistrement longitudinal qui est caractérisé par une couche d'enregistrement présentant un axe de magnétisation facile et dans le plan.

11. Structure de tête selon la revendication 1, 2 ou 3, qui est faite d'un seul tenant avec une telle poutrelle (28).

12. Structure de tête selon la revendication 1, 2 ou 3, qui, conjointement avec une telle poutrelle (28), possède une masse cumulée inférieure à 3 milligrammes environ.

13. Structure de tête selon la revendication 1, 2 ou 3, dans laquelle ladite structure de pôle (32) est fabriquée, au moins partiellement, en étant contiguë à une couche (34b) de matériau résistant à l'usure dont une partie constitue ladite structure de contact (34).

14. Structure de tête selon la revendication 13, qui comporte, en outre, une autre couche (34c) de matériau résistant à l'usure coopérant avec ladite couche citée en premier (34b) afin de créer une colonne de ce matériau qui englobe entièrement ladite structure de pôle (32), en étant contiguë à sa dite partie de lecture/d'écriture (32a).

15. Structure de tête selon la revendication 1, 2 ou 3, dans laquelle ladite structure de contact (34) présente un degré de dureté Knoop supérieur à 1000 kg/mm².
